# EUROPEAN PATENT APPLICATION

(11) **EP 1 501 289 A1**
(43) Date of publication of application: **26.01.2005**
(21) Application number: 04015893.3
(22) Date of filing: 06.07.2004
(51) Int. Cl.: H04N 5/445, H04N 5/00

(54) **Data recording and reproducing apparatus displaying information about recording reservations**

(30) Priority: 24.07.2003 JP 2003201306
(71) Applicant: Funai Electric Co., Ltd., Daito-shi, Osaka (JP)
(72) Inventor: Kobayashi, Hideo, c/o Funai Electric Co., Ltd., Daito-shi, Osaka (JP)
(74) Representative: Grünecker, Kinkeldey, Stockmair & Schwanhäusser Anwaltssozietät

(57) **Abstract**

A system control circuit (18) for controlling operation of an information recording and reproducing apparatus (100) selects one of a plurality of predetermined time frames in response to an input from an operation unit (2) for receiving an externally input instruction, generates a signal for displaying a plurality of regions in a predetermined shape in a matrix form on a menu screen corresponding to the selected predetermined time frame according to configurational information, the regions being correlated with respective dates and respective times at predetermined time intervals, and selects one of the regions in the predetermined shape on the menu screen in response to an input from the operation unit (2) to register the selected region as recording reservation information.

## Description

### BACKGROUND OF THE INVENTION

### Field of the Invention

The present invention relates to a data recording and reproducing apparatus for recording and reproducing television broadcasts and having the function of making recording reservations. In particular, the present invention relates to display of information about recording reservations.

### Description of the Background Art

With a conventional data recording and reproducing apparatus having the function of making recording reservations, a user can make a recording reservation by designating at least the recording start time, the recording finish time (or duration of the recording) as well as the channel of a television broadcast to be recorded.

Further, there is a recording reservation apparatus with which a recording reservation can be made using recording information at the time of making the reservation that is displayed on a television monitor.

A first conventional example of the recording and reproducing apparatus has a known structure as detailed below to which applied a program listing display that can visually display, in such cases where the channel of a television broadcast program is selected and a recording reservation is made, the status of recordings made in the past as well as a program guide of upcoming programs to be broadcast (see Japanese Patent Laying-Open No. 2001-313878).

As to the first conventional example, program information cells showing information about individual programs are arranged on a table on a program guide screen, the table having the horizontal axis representing channel attributes and the vertical axis representing date and time attributes. A display filtering screen is provided for restricting displayed program information. It is disclosed that only a program information cell indicating information about a program in a certain time frame on a certain day of the week is displayed on the program guide screen. The certain day of the week is the one designated by day-designating operation and the certain time frame is the one designated by time-designating operation.

As a second conventional example, there is a method of displaying time when a reservation for a recording is made and a device having the function of displaying time (see Japanese Patent Laying-Open No. 07-260962).

Regarding the second conventional example, twenty-four hours (one day) are indicated on semidiurnal basis as well as on time-section basis, specifically four or more time sections. The semidiurnal-basis indication of time, which more or less conforms to daily life rhythm, allows users to readily recognize the time. Convenience to users is thus improved.

For users, however, it is complicated and difficult to make recording reservations by designating the recording start time, recording finish time and recording channel.

Even if a recording reservation can be made with the aid of visual guidance as disclosed in Japanese Patent Laying-Open No. 2001-313878, scrolling on the screen is still necessary for selecting a certain time as the recording start time, often resulting in complicated operations for users.

### SUMMARY OF THE INVENTION

An object of the present invention is to provide a data recording and reproducing apparatus with which a user can easily make a recording reservation in a time frame at user's choice.

According to an aspect of the present invention, a data recording and reproducing apparatus includes a receiving unit receiving program data of a channel, a storage unit storing information about a recording operation and a reproducing operation, an input unit receiving an externally input instruction, a clock unit measuring date and time, and a control unit controlling the recording operation and the reproducing operation. The storage unit includes a circuit storing a recording table having reservation data registered thereon, time-frame information for specifying a plurality of predetermined time frames, and configurational information for displaying a plurality of regions in a predetermined shape in a matrix form on a plurality of menu screens corresponding respectively to the predetermined time frames. The control unit includes a time-frame selection circuit selecting one of the predetermined time frames in response to an input from the input unit, a circuit generating a signal for displaying the regions in the predetermined shape in the matrix form on one of the menu screens that corresponds to the selected predetermined time frame according to the configurational information, the regions being correlated with respective dates and respective times at predetermined time intervals based on the time-frame information, a circuit selecting one of the regions in the predetermined shape on the menu screen in response to an input from the input unit, a circuit generating in response to an input of a channel from the input unit, the reservation data based on date and time of recording correlated with the selected region in the predetermined shape and based on the input channel and registering the generated reservation data on the recording table, and a circuit issuing an instruction to record the program data received by the receiving unit on the storage unit when the date and time measured by the clock unit match the date and time of recording.

According to another aspect of the present invention, a data recording and reproducing apparatus includes an input unit receiving an externally input instruction, a storage unit storing information about operation of the data recording and reproducing apparatus, the storage unit including a circuit storing information about recording reservation for correlating reservation data with a plurality of predetermined time frames and configurational information for displaying a plurality of regions in a predetermined shape in a matrix form on a plurality of menu screens corresponding respectively to the predetermined time frames, and a control unit controlling the operation of the data recording and reproducing apparatus, the control unit including a time-frame selection circuit selecting one of the predetermined time frames in response to an input from the input unit, a circuit generating a signal for displaying the regions in the predetermined shape in the matrix form on one of the menu screens that corresponds to the selected predetermined time frame according to the configurational information, the regions being correlated with respective dates and respective times at predetermined time intervals, and a reservation information registration circuit selecting one of the predetermined regions in the predetermined shape in response to an input from the input unit and registering the selected region as the information about recording reservation.

Preferably, the time-frame selection circuit includes a circuit for displaying, on the menu screen, a plurality of specific areas corresponding respectively to the predetermined time frames and specifying which of the predetermined time frames corresponds to a specific area selected from the specific areas in response to an input from the input unit.

Preferably, the predetermined time frames correspond to time frames determined by dividing one day into the time frames each including six hours.

Preferably, the information about recording reservation includes a recording table having the reservation data registered thereon and time-frame information for specifying the predetermined time frames.

Preferably, the information about recording reservation includes a plurality of recording tables corresponding respectively to the predetermined time frames and having the reservation data registered thereon.

Preferably, the data recording and reproducing apparatus further includes a receiving unit receiving program data of a channel, and a clock unit measuring time and date. Preferably, the reservation information registration circuit includes a circuit selecting one of the regions in the predetermined shape on the menu screen in response to an input from the input unit, and a circuit generating in response to an input of a channel from the input unit, the reservation data based on date and time of recording that are correlated with the selected region in the predetermined shape and based on the input channel and registering the generated reservation data on the recording table. Preferably, the control unit further includes a circuit issuing an instruction to record the program data received by the receiving unit on the storage unit when the date and time measured by the clock unit match the date and time of recording.

Preferably, respective dates correlated with the regions in the predetermined shape include dates from a predetermined date in the past to a predetermined date in the future. Preferably, the control circuit further includes a circuit reproducing, based on the reservation data having recorded program data that corresponds to the selected region in the predetermined shape on the menu screen, the program data of the reservation data in response to an input from the input unit.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a functional block diagram illustrating a configuration of an information recording and reproducing apparatus as an exemplary data recording and reproducing apparatus of the present invention.
Fig. 2 shows a menu screen of morning navigation in a recording reservation mode of simple recording reservation.
Fig. 3 shows a menu screen of afternoon navigation in the recording reservation mode of the simple recording reservation.
Fig. 4 shows a menu screen of evening navigation in the recording reservation mode of the simple recording reservation.
Fig. 5 shows a menu screen of midnight navigation in the recording reservation mode of the simple recording reservation.
Fig. 6 shows an exemplary time-frame table for specifying four time frames of one day each corresponding to six hours.
Fig. 7 shows an exemplary matrix management table corresponding to a plurality of rectangular regions displayed on the menu screen of the simple recording reservation.
Fig. 8 shows an exemplary simple recording table generated in the recording reservation mode of the simple recording reservation.
Fig. 9 shows an exemplary data table of recording files each recorded in the simple recording reservation mode or a normal recording reservation mode.
Figs. 10-12 show a flowchart of an operation, in a first embodiment, of displaying the menu screen of the simple recording reservation in response to an operation signal effected by operation of a user.
Figs. 13 and 14 show a flowchart of an operation of making a recording reservation on the menu screen of the simple recording reservation in response to an operation signal effected by a user.
Fig. 15 shows an exemplary simple recording table for a time frame corresponding to evening navigation according to a second embodiment of the present invention.
Fig. 16 shows an exemplary management table for displaying a menu screen for the time frame corresponding to evening navigation.
Figs. 17-19 show a flowchart of an operation, in the second embodiment, of displaying a menu screen of the simple recording reservation in response to an operation signal effected by a user.

### DESCRIPTION OF THE PREFERRED EMBODIMENTS

Embodiments of the present invention are hereinafter described in detail with reference to the drawings. It is noted that like components are herein denoted by like reference characters, named identically and function identically. Therefore, the detailed description thereof will not be repeated.

### First Embodiment

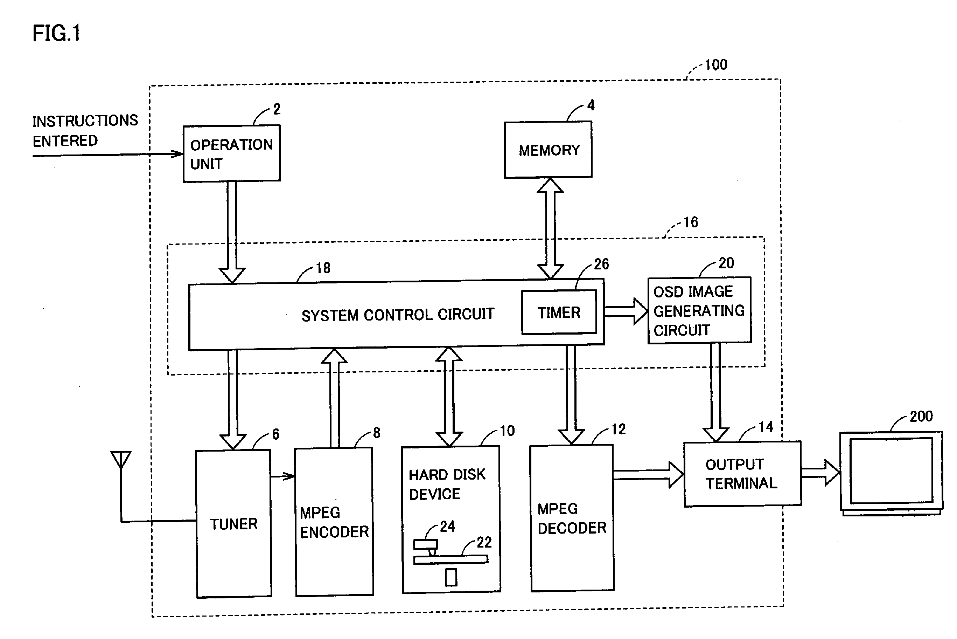

Referring to Fig. 1, an information recording and reproducing apparatus 100 includes an operation unit 2 receiving instructions entered by a user, a tuner 6 for receiving analog television signals (hereinafter referred to as TV signals) included in a television broadcast, an MPEG (Moving Picture Expert Group) encoder 8 for encoding the TV signals supplied from tuner 6 into moving image digital data (hereinafter referred to as moving image data), a hard disk device 10 for storing the moving image data, an MPEG decoder 12 for decoding the moving image data into TV signals, an output terminal 14 for connecting to external equipment, a control unit 16 for controlling the operation of information recording and reproducing apparatus 100, and a nonvolatile memory 4 for writing and reading data. The TV signals include at least an image signal. When the signals received by tuner 6 are digital signals, the encoding by MPEG encoder 8 may be dispensed with.

Control unit 16 includes a system control circuit 18 having a timer 26 for measuring time and includes an OSD (On Screen Display) image generating circuit 20 for generating a menu screen. Memory 4 may be included within system control circuit 18. The time measured by timer 26 may be displayed on a display (not shown) provided on the casing of information recording and reproducing apparatus 100. Further, the time measured by timer 26 may be output via output terminal 14 to external equipment in the form of a time display image generated by OSD image generating circuit 20.

Hard disk device 10 includes a hard disk 22 and a recording and reproducing head 24 for writing data onto and reading data from hard disk 22. Hard disk 22 stores a plurality of coded frame data corresponding respectively to a plurality of frames to be reproduced along a time axis of moving image data. The stored coded frame data are correlated with respective addresses.

The function of information recording and reproducing apparatus 100 in the embodiments of the present invention is not particularly limited to storing of moving image data on hard disk device 10. Information recording and reproducing apparatus 100 may store moving image data on a detachable recording medium. The detachable recording medium may be DVD (Digital Versatile Disc) for example. The detachable recording medium may alternatively be such a nonvolatile memory card as SD (Secure Digital) card.

An operation of information recording and reproducing apparatus 100 according to an embodiment of the present invention is now described.

A user performs various operations by means of operation unit 2. Then, system control circuit 18 controls the operation of information recording and reproducing apparatus 100 based on the various operations.

"Various operations" for example refer to the operation of designating a channel (hereinafter referred to as CH), the operation of making a recording reservation, the operation of designating a recorded program, the operation of instructing to record, the operation of instructing to reproduce, the operation of stopping recording, the operation of stopping reproduction, and the operation of erasing a recorded program.

Operation unit 2 provides various operation signals to system control circuit 18 according to the user's operations. Operation unit 2 may be a remote controller (not shown) separated from information recording and reproducing apparatus 100.

When an instruction to change the channel is entered by a user to operation unit 2, system control circuit 18 supplies to tuner 6 a CH designation signal of the analog television broadcast (NTSC (National Television Standards Committee) system, PAL (Phase Alternation by Line) system or SECAM (SEquential Couleur A Memoire) system for example. Tuner 6 then receives analog television broadcast waves corresponding to the designated CH. Tuner 6 supplies a TV signal obtained by demodulating the television broadcast waves to MPEG encoder 8. MPEG encoder 8 performs MPEG coding on the TV signal based on an encode control signal of system control circuit 18. The MPEG-coded TV signal is converted into moving image data. System control circuit 18 writes the moving image data on hard disk device 10. Hard disk device 10 writes the moving image data and reads written moving image data with a read control signal of system control circuit 18. MPEG decoder 12 performs MPEG decoding on the read moving image data based on a decode control signal of system control circuit 18. The MPEG-decoded moving image data is converted into a TV signal. The resultant TV signal is output via output terminal 14 to external equipment. The external equipment is not particularly limited to any device and may be a display device 200 for example.

OSD image generating circuit 20 generates an information display image for displaying an image according to various information display signals supplied from system control circuit 18. The generated information display image is output in the form of an image signal to the outside via output terminal 14. For example, the information display image includes a menu screen with which a user makes a recording reservation for a program.

Display device 200 displays the information display image generated by OSD image generating circuit 20 based on the image signal output from output terminal 14.

Information recording and reproducing apparatus 100 has an operation mode which is recording reservation mode in which the menu screen with which a user makes a recording reservation is output in the form of an image signal to be displayed on display device 200.

A description is given below of the menu screen which is output in the recording reservation mode of information recording and reproducing apparatus 100 according to the embodiment of the present invention.

According to an operation signal for displaying the recording reservation menu screen that is effected by an operation of a user on operation unit 2, system control circuit 18 directs OSD image generating circuit 20 to generate the menu screen for making a recording reservation. As to the type of the program recording reservation mode, the recording reservation mode includes simple recording reservation and normal recording reservation.

"Normal recording reservation" refers to a recording reservation mode in which a user can make a recording reservation by directly entering at least the CH, recording date, recording start time and recording finish time.

"Simple recording reservation" refers to a recording reservation mode in which a menu screen is output on which a plurality of regions with a predetermined shape are displayed in the form of a matrix with rows and columns and the regions are each correlated with any date and any time frame. A user can select a specific date and a specific time frame by selecting one of the regions with the predetermined shape. On the region with the predetermined shape selected by the user's operation on operation unit 2, the user can designate a CH to make a reservation for a recording. When the menu screen is displayed, a plurality of regions in a predetermined shape are indicated, on the menu screen, in the form of a matrix having rows and columns, the regions corresponding to respective dates and times ranging from predetermined date and time in the past to predetermined date and time in the future.

System control circuit 18 allows display device 200 to display menu screens corresponding respectively to a plurality of time frames. These time frames are not particularly limited to any specific ones. For example, one day may be divided into four time frames each including six hours. In this case, the time frame from 6 a.m. to noon corresponds to morning navigation, the time frame from noon to 6 p.m. corresponds to afternoon navigation, the time frame from 6 p.m. to 12 midnight corresponds to evening navigation, and the time frame from 12 midnight to 6 a.m. corresponds to midnight navigation.

System control circuit 18 accordingly allows display device 200 to display a menu screen of the time frame corresponding to one of the above-described morning navigation, afternoon navigation, evening navigation and midnight navigation according to an input of a user to operation unit 2.

A description is now given of respective configurations of the menu screens corresponding respectively to the morning navigation, afternoon navigation, evening navigation and midnight navigation in the simple recording reservation mode of information recording and reproducing apparatus 100 in this embodiment of the present invention.

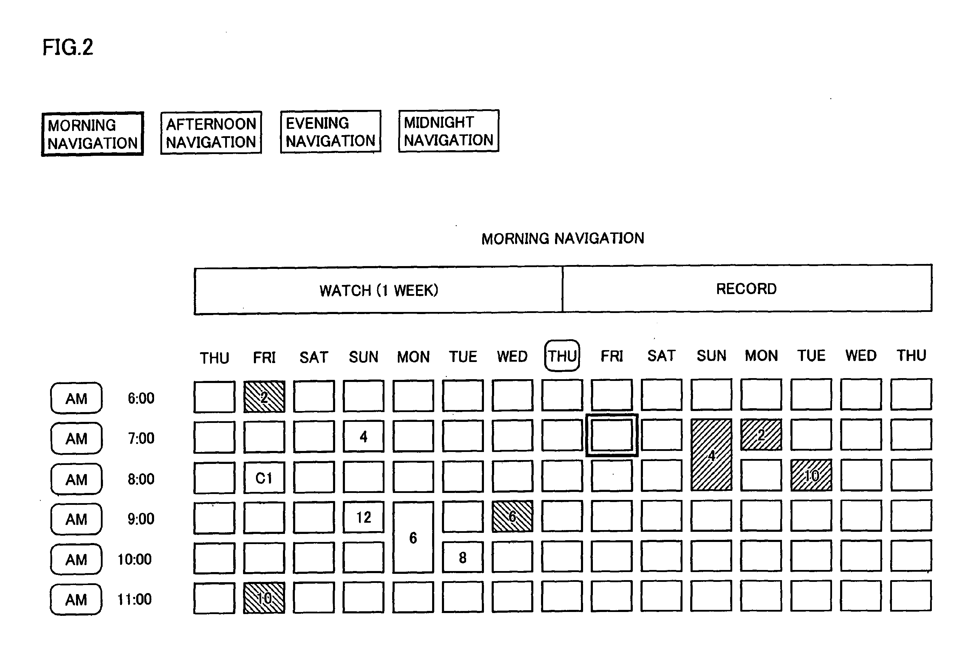

When an operation signal for displaying a menu screen of the simple recording reservation is provided, or an operation signal for displaying the menu screen of the morning navigation is provided while the menu screen of any time frame except for that of the morning navigation is being displayed, system control circuit 18 allows the menu screen of the morning navigation of the simple recording reservation as shown in Fig. 2 to be displayed.

When the menu screen of the simple recording reservation is to be displayed according to an operation signal effected by a user, system control circuit 18 may allow, based on information about initially displayed time-frame stored in memory 4, the menu screen to be displayed corresponding to one of a plurality of time frames that is set in advance. For example, according to an operation signal effected by a user, system control circuit 18 may allow the menu screen of the simple recording reservation in such a manner that allows one of the morning navigation, afternoon navigation, evening navigation and midnight navigation to be displayed as the initially displayed time frame.

OSD image generating circuit 20 indicates, on the displayed menu screen, a plurality of rectangular regions in the form of a matrix, the rectangular regions being correlated with respective dates and times of the last week and this week. OSD image generating circuit 20 displays the regions in respective colors appropriate for respective states of programs for which recording reservations are made last week and this week. The regions correlated with respective dates and times of last week and this week are not particularly limited to rectangular regions. Each of the regions may be such a polygon as square or rhombus or such a closed curve as circle or ellipse.

The rectangular regions correlated with respective dates and times are displayed in respective display colors according to respective program reservation states. "Display colors according to respective program reservation states" refer to display colors changed depending on respective states of programs, namely a program having been recorded and still unreproduced, a program having been recorded and reproduced, a program to be recorded, and a program being recorded for example.

OSD image generating circuit 20 displays on the menu screen a plurality of specific areas indicating which of the time frames is now selected from a plurality of time frames. These specific areas are correlated with respective time frames. When one of the specific areas is selected by an operation signal effected by a user, system control circuit 18 allows the menu screen of the time frame corresponding to the selected specific area.

For example, system control circuit 18 indicates the frame of a character string for a time frame displayed as the menu screen by heavy lines, among four frames containing respective character strings like "Morning Navigation", "Afternoon Navigation", "Evening Navigation" and "Midnight Navigation" as shown in Fig. 2. Alternatively, system control circuit 18 may allow the frame of the character string for the time frame displayed as the menu string in flashing manner.

A user can move a cursor indicated on the menu screen of the simple recording reservation by operating operation unit 2 or a remote controller. When the cursor is to be moved, system control circuit 18 changes a variable indicative of the cursor position according to an operation signal for example from operation unit 2. The cursor position is thus changed and OSD image generating circuit 20 re-displays the cursor based on the changed variable indicating the cursor position.

The user can accordingly select one of the rectangular regions displayed on the menu screen by moving the cursor. Then, the user can make a recording reservation by selecting a certain day of the week and a certain time. For example, the user moves the cursor to a certain rectangular region among the regions correlated with the present time and later times measured by timer 26 and designates a certain CH with operation unit 2 so that a reservation for a recording on the specified day of the week, time and CH is completed.

By making a recording reservation for a program of a certain day of the week, reservations for recordings of the program on the same day of the following weeks may be made at a time. Further, when the cursor is moved to a rectangular region corresponding to a recorded program or a program for which a recording reservation is made, system control circuit 18 may direct OSD image generating circuit 20 to display on a predetermined region of the screen such details as information about the relevant recorded program or the program to be recorded.

A description is given below of an operation of system control circuit 18 to display the menu screen as shown in Fig. 2.

OSD image generating circuit 20 generates the menu screen of the simple recording reservation by displaying a plurality of rectangular regions in the form of a matrix with rows and columns. System control circuit 18 correlates respective columns of the rectangular regions arranged in the form of the matrix with respective days of the week. System control circuit 18 further correlates respective rows with respective times. Here, this operation of system control circuit 18 is not particularly limited to the correlation of the columns with respective days of the week. For example, system control circuit 18 may correlate the rows with respective days of the week.

The times correlated with respective rows are those arranged at predetermined time intervals in a time frame displayed on the menu screen. System control circuit 18 refers to time-frame information specifying each of a plurality of time frames. Here, the time-frame information is for example a time-frame table including the start time and the end time of each time frame. The time-frame table specifies respective time frames of the morning navigation, afternoon navigation, evening navigation and midnight navigation. For example, when the menu screen corresponding to the time frame of the morning navigation is to be displayed, system control circuit 18 correlates, based on the time-frame table, respective rows of the rectangular regions with respective times at intervals of an hour included in the time frame from 6 a.m. to noon of the morning navigation. Although the time-frame table is herein stored in advance in memory 4, the location of storage of the time-frame table is not particularly limited to the memory. For example, the time-frame table may be stored on hard disk device 10.

The days of the week correlated with respective columns are those including today. For example, when the menu screen of the simple recording reservation as shown in Fig. 2 is to be displayed, system control circuit 18 correlates the day of the week corresponding to today with the central column on the menu screen. Then, with today specified as an origin, system control circuit 18 correlates the columns with appropriate days of the week before today and the week after today.

While the menu screen corresponding to any of time frames except for that of the morning navigation is displayed, an instruction to display the menu screen of the morning navigation may be entered by pressing a time-frame-change button provided on operation unit 2 or a remote controller so that the menu screen is changed to that of the morning navigation. Alternatively, the instruction to display the menu screen of the morning navigation may be entered by a user moving the cursor indicated on the menu screen to select the specific area corresponding to the morning navigation on the menu screen.

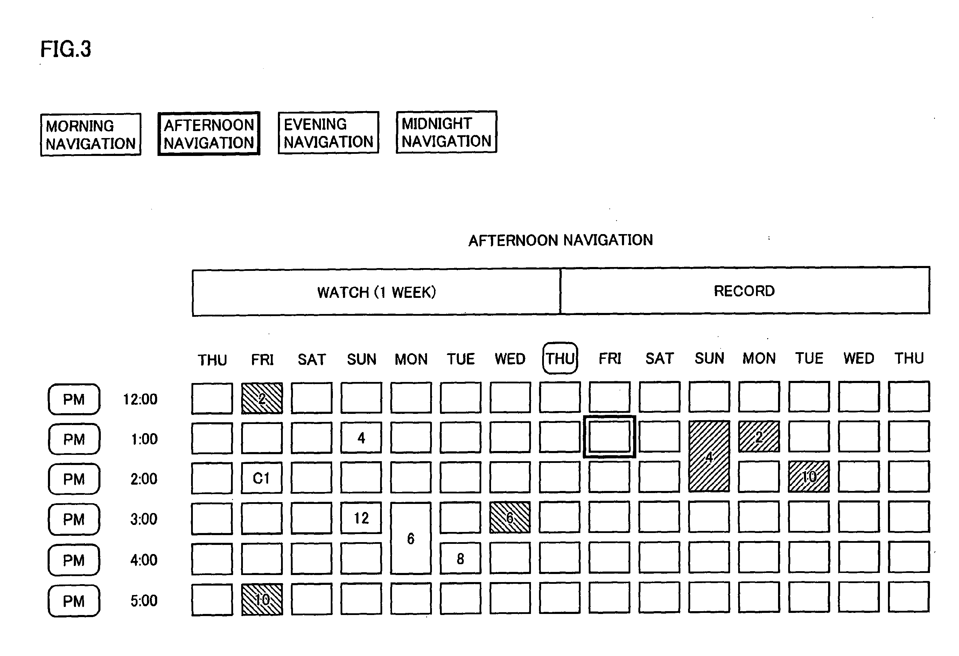

According to an operation signal effected by a user entering an instruction to display the menu screen of the simple recording reservation, or according to an operation signal effected by an instruction entered to display the menu screen of the afternoon navigation while the menu screen of any time frame except for that of the afternoon navigation is being displayed, system control circuit 18 allows the menu screen as shown in Fig. 3 of the afternoon navigation of the simple recording reservation to be displayed. The menu screen of the afternoon navigation of the simple recording reservation as shown in Fig. 3 differs from that of the morning navigation described in connection with Fig. 2 in terms of the following feature. When the menu screen of the time frame of the afternoon navigation is to be displayed, system control circuit 18 correlates, based on the time-frame table, respective rows of the rectangular regions displayed on the menu screen with respective times at intervals of an hour included in the time frame from noon to 6 p.m.

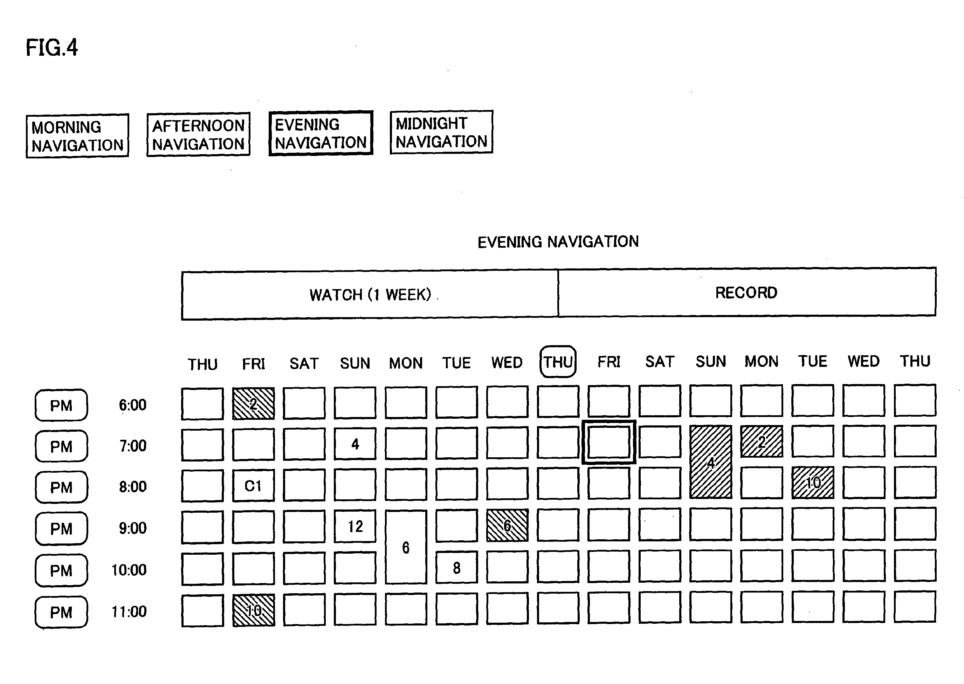

According to an operation signal effected by a user entering an instruction to display the menu screen of the simple recording reservation, or according to an operation signal effected by an instruction entered to display the menu screen of the evening navigation while the menu screen of any time frame except for that of the evening navigation is being displayed, system control circuit 18 allows the menu screen as shown in Fig. 4 of the evening navigation of the simple recording reservation to be displayed. The menu screen of the evening navigation of the simple recording reservation as shown in Fig. 4 differs from that of the morning navigation described in connection with Fig. 2 in terms of the following feature. When the menu screen of the time frame of the evening navigation is to be displayed, system control circuit 18 correlates, based on the time-frame table, respective rows of the rectangular regions displayed on the menu screen with respective times at intervals of an hour included in the time frame from 6 p.m. to 12 midnight.

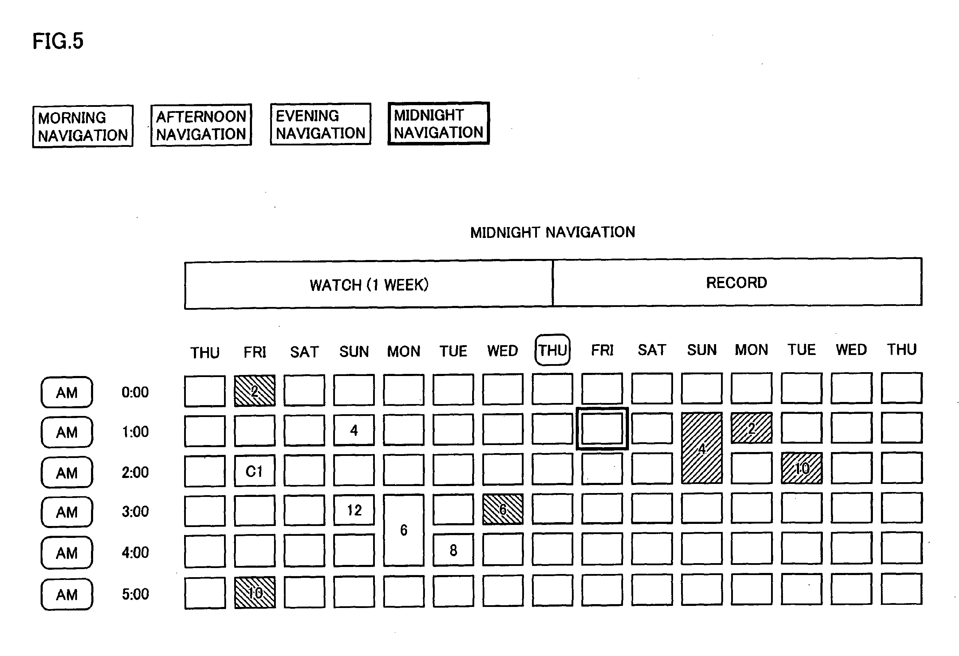

According to an operation signal effected by a user entering an instruction to display the menu screen of the simple recording reservation, or according to an operation signal effected by an instruction entered to display the menu screen of the midnight navigation while the menu screen of any time frame except for that of the midnight navigation is being displayed, system control circuit 18 allows the menu screen as shown in Fig. 5 of the midnight navigation of the simple recording reservation to be displayed. The menu screen of the midnight navigation of the simple recording reservation as shown in Fig. 5 differs from that of the morning navigation described in connection with Fig. 2 in terms of the following feature. When the menu screen of the time frame of the midnight navigation is to be displayed, system control circuit 18 correlates, based on the time-frame table, respective rows of the rectangular regions displayed on the menu screen with respective times at intervals of an hour included in the time frame from 12 midnight to 6 a.m.

A description is given below of a method using a management table for correlating the rows and columns of a plurality of rectangular regions displayed on the menu screen corresponding to one of respective time frames of the morning navigation, afternoon navigation, evening navigation and midnight navigation, with respective times and respective days of the week, as an exemplary method therefor.

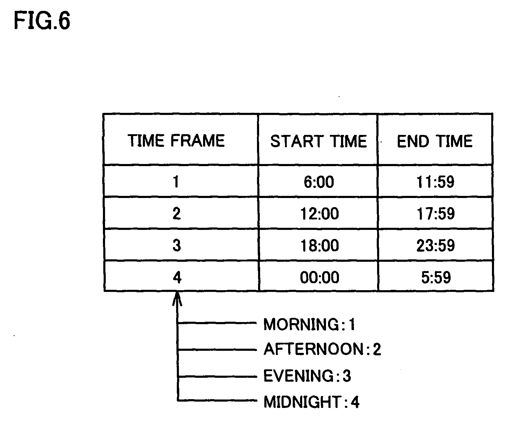

In generating the management table, system control circuit 18 refers to the time-frame table as shown in Fig. 6 that is stored in advance in memory 4 or on hard disk device 20. In the time-frame table, the start time and the end time of each time frame is set in advance.

In the first embodiment of the present invention, one day is divided for example into four time frames each including six hours. System control circuit 18 then correlates respective rows of the rectangular regions displayed in the form of the matrix on the menu screen corresponding to one of respective time frames of the morning navigation, afternoon navigation, evening navigation and midnight navigation, with respective times at intervals of a predetermined time included in the time frame from the start time to the end time in the time-frame table. Although the predetermined time is not limited to a particular one, system control circuit 18 for example correlates respective rows with respective times at intervals of an hour.

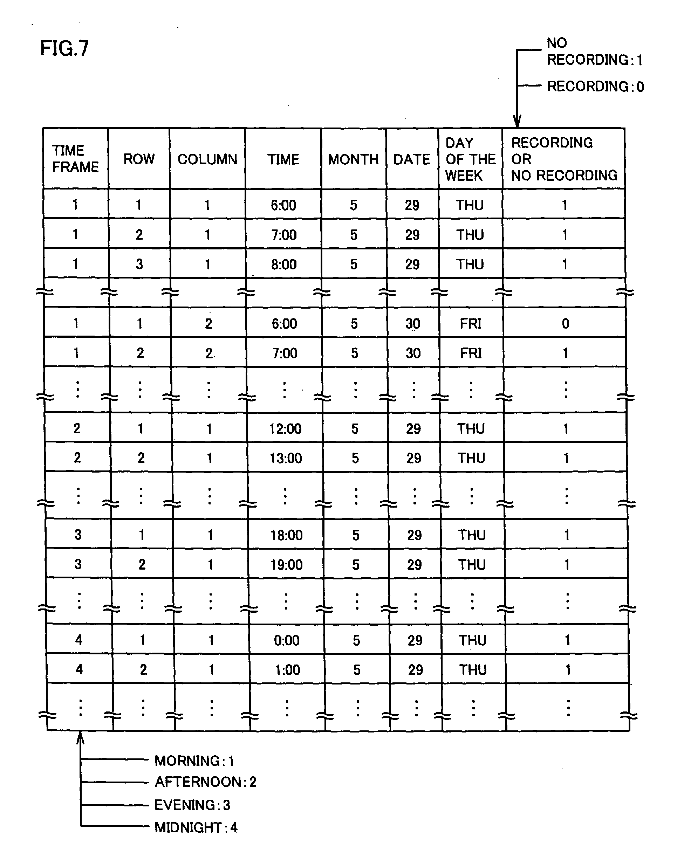

As shown in Fig. 7, system control circuit 18 correlates, based on the time-frame table described in connection with Fig. 6, respective rows and columns of the rectangular regions displayed on the menu screen of the simple recording reservation with respective times and respective days of the week. System control circuit 18 generates or updates the management table at least after the date and time measured by timer 26 is changed and before the menu screen of the simple recording reservation is displayed. While the management table is not particularly limited to any, the management table may be stored in memory 4, stored on hard disk device 10 on which moving image data is stored or on a detachable recording medium.

In generating the management table, system control circuit 18 correlates, based on the time-frame table described in connection with Fig. 6, respective rows and columns of the time frames with respective times and respective days of the week. System control circuit 18 correlates the central column of the rectangular regions on the menu screen corresponding to one of respective time frames of the morning navigation, afternoon navigation, evening navigation and midnight navigation, with the day of the week of today measured by timer 26. With the central column as an origin, system control circuit 18 correlates other columns of the time frames with appropriate dates. Based on information about the day of the week, system control circuit 18 adds days of the week corresponding to respective dates to the management table. The information about the day of the week may be stored in memory 4 or stored on hard disk device 10. It is supposed here that the date of today is Thursday, June 5.

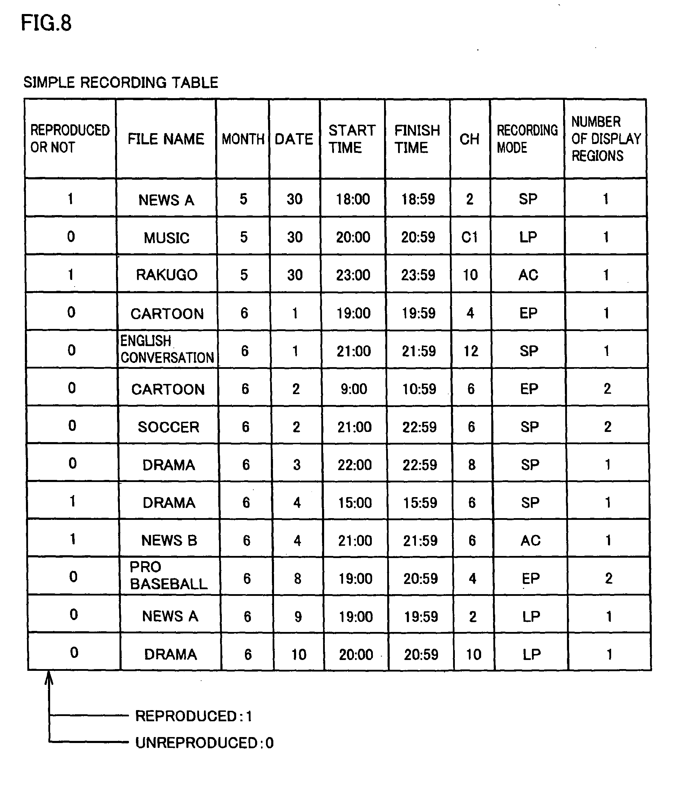

The management table includes a reservation flag indicating whether or not a reservation for a recording is made and the recording has been done or a reservation for a recording to be done is made, for a corresponding date and a corresponding time frame, based on a simple recording table (as shown in Fig. 8) on which registered reservation data regarding recording reservations.

As discussed in conjunction with Fig. 2, on the rectangular regions displayed in the form of the matrix, a program having been recorded and unreproduced, a program having been recorded and reproduced, a program to be recorded and a program being recorded are shown in different display colors together with indications of channels over two weeks including today, specifically a week before today and a week after today. Based on the simple recording table provided separately from the management table, OSD image generating circuit 20 changes the display color of a program of a certain time on a certain day of the week for which a recording reservation is made. System control circuit 18 refers to the reservation flag of the management table. When there is found a reservation for a recording having been made or a reservation for a recording to be made, system control circuit 18 then refers to the simple recording table. Based on the simple recording table referred to, OSD image generating circuit 20 changes the display color of the rectangular region where the recording reservation is made. When a program is being recorded, system control circuit 18 directs OSD image generating circuit 20 to indicate the rectangular region corresponding to the recorded program in flashing manner.

In response to registration of reservation data on the simple recording table, OSD image generating circuit 20 may change the display color of a rectangular region corresponding to the reservation data.

Further, based on an instruction to reproduce that is effected by selecting a recorded program with the cursor moved by the user on the menu screen, system control circuit 18 may allow the selected recorded program to be reproduced.

As shown in Fig. 8, the simple recording table includes reservation data, namely information about recordings of programs for which reservations are made using the menu screen in the simple recording reservation mode. The reservation data includes reproduction flag indicating whether a program is reproduced or not, file name, date of recording, recording start time, recording finish time, CH of a program to be recorded, recording mode indicating the recording image quality when a program is recorded, and the number of rectangular regions corresponding to a program that are displayed on the menu screen (hereinafter referred to as the number of display regions). The simple recording table may be stored on hard disk device 10 or stored in memory 4.

The reproduction flag indicates whether a recorded program has been reproduced or unreproduced. When an operation signal effected by an instruction to reproduce is entered after a rectangular region corresponding to a recorded program is selected from a plurality of rectangular regions, system control circuit 18 overwrites "0" of the relevant reproduction flag, which indicates that the program is unreproduced, with "1".

When a recording reservation is to be made, system control circuit 18 generates the reservation data based on the date and time corresponding to a rectangular region selected by a user as well as a CH entered by the user. System control circuit 18 registers the generated reservation data on the recording table. System control circuit 18 sets each of the items of the reservation data except for the date, recording start time, recording finish time and CH to an initial value.

For example, the initial value of the number of display regions is "1". When a user selects one of the rectangular regions and enters a CH, system control circuit 18 makes a reservation for a recording of an hour corresponding to the time correlated with the selected rectangular region.

On the menu screen, a user can change information details of a program to be recorded in the registered reservation data. Based on the information changed by the user, system control circuit 18 changes the corresponding reservation data on the recording table. In changing the recording finish time, system control circuit 18 changes the number of display regions based on the recording start time and the recording finish time. For example, if the duration from the recording start time to the recording finish time is longer than one hour and is not longer than two hours, system control circuit 18 changes the number of display regions to 2.

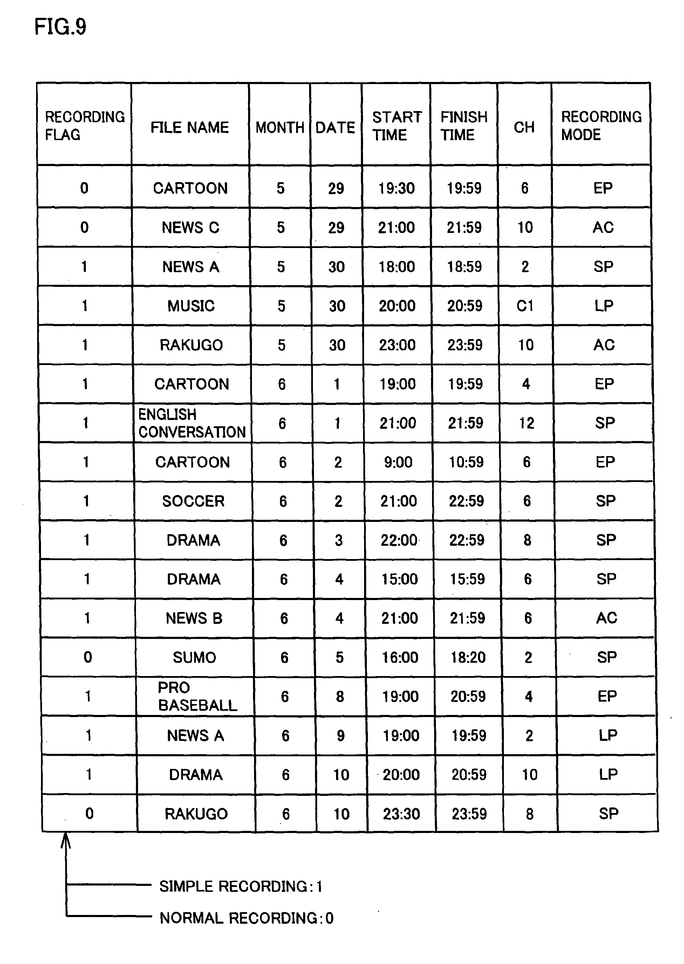

In each of the simple recording reservation mode and the normal recording reservation mode, system control circuit 18 adds to a data table as shown in Fig. 9 an appropriate recording flag indicating whether the reservation mode is the simple recording reservation mode or the normal recording reservation mode. A recording file recorded in the simple recording reservation mode is erased when a predetermined period of time has passed. Predetermined time here is two weeks for example. In searching for a recording file to be erased, system control circuit 18 refers to this recording flag. System control circuit 18 thus erases a recording file recorded in the simple recording reservation mode two weeks ago. System control circuit 18 may erase any recording file recorded a predetermined period of time ago at the time when the date changes.

Regarding recording files recorded in the normal recording reservation mode, system control circuit 18 stores these recording files until an operation signal is provided in response to an instruction to erase entered by a user.

According to an operation signal provided for changing the recording flag of a recording file recorded in the simple recording reservation mode, system control circuit may keep the recording file until an operation signal is provided in response to an entered instruction to erase.

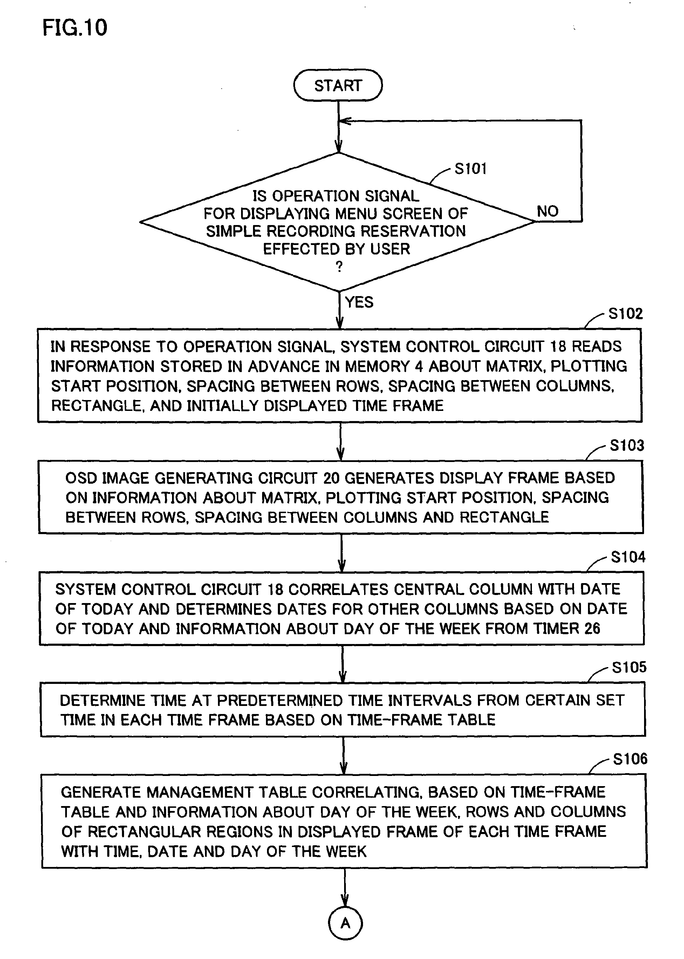

Figs. 10-12 show a flowchart of an operation of displaying the menu screen of the simple recording reservation in response to an operation signal effected by operation of a user.

Referring to Fig. 10, system control circuit 18 determines whether or not an operation signal is provided for displaying the menu screen of the simple recording reservation in response to operation of a user on operation unit 2 (step S101).

In step S101, when the operation signal for displaying the menu screen of the simple recording reservation is not provided, system control circuit 18 continues to determine whether or not the operation signal for displaying the menu screen of the simple recording reservation is provided.

In step S101, when the operation signal for displaying the menu screen of the simple recording reservation is provided, system control circuit 18 reads configurational information about the menu screen stored in advance in memory 4. The configurational information specifically refers to information about the rectangular regions displayed on the menu screen including information about matrix, plotting start position, spacing between rows, spacing between columns, rectangle, and initially displayed time frame for example (step S102).

Based on the information about matrix, plotting start position, spacing between rows, spacing between columns and rectangle, OSD image generating circuit 20 displays the rectangular regions on the menu screen (step S103).

Based on the date of today measured by timer 26 and information about the day of the week that is stored on hard disk device 10, system control circuit 18 correlates the central column of the matrix with today and determines other days corresponding to other columns respectively with the central column as an origin (step S104).

Based on the time-frame table, system control circuit 18 determines, from the time set in each time frame, respective times corresponding to the rows at predetermined time intervals (step S105).

Based on the time-frame table and the information about the day of the week, system control circuit 18 generates the management table correlating the rows and columns of the rectangular regions displayed on the menu screen with respective times, dates and days of the week (step S106).

The part of the flowchart from step S104 to step S106 for generating the management table is not particularly limited to the generation thereof according to the operation signal for displaying the menu screen. For example, system control circuit 18 may update the management table in response to a change of the date by timer 26. Further, system control circuit 18 may update the management table when the time measured by timer 26 indicates a predetermined time.

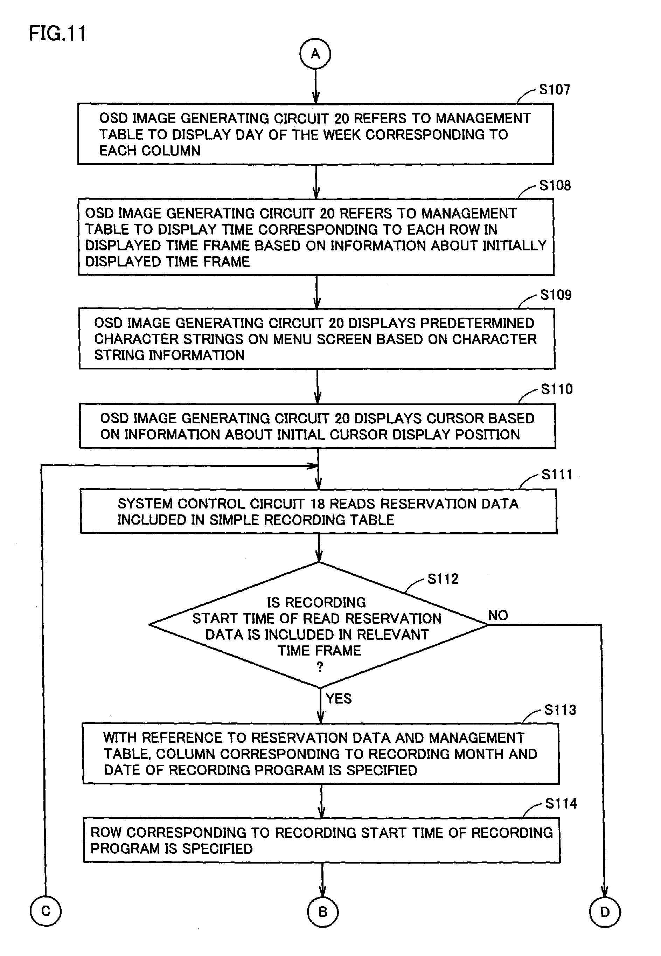

Referring to Fig. 11, OSD image generating circuit 20 refers to the management table to display the day of the week corresponding to each column of the rectangular regions displayed in the form of the matrix on the menu screen (step S107).

OSD image generating circuit 20 then refers to the management table to display, based on the information about the initially displayed time frame, the time corresponding to each row of the rectangular regions in the time frame displayed on the menu screen (step S108).

Based on character string information, OSD image generating circuit 20 displays predetermined character strings on the menu screen (step S109).

Based on information about the initial position of the cursor, OSD image generating circuit 20 displays the cursor (step S110).

The information about the character strings and about the cursor initial position may be stored in advance in memory 4 or stored in advance on hard disk device 10.

System control circuit 18 then reads the reservation data included in the simple recording table (step S111).

System control circuit 18 determines whether or not the recording start time in the read reservation data is included in the time frame displayed on the menu screen (step S112).

In step S 112, when the recording start time included in the read reservation data is not included in the time frame displayed on the menu screen, system control circuit 18 proceeds to step S120.

In step S112, when the recording start time included in the read reservation data is included in the time frame displayed on the menu screen, system control circuit 18 refers to the management table and the read reservation data to specify the column correlated with the recording month and date of a program for which a recording reservation is made (step S113).

Then, system control circuit specifies the row correlated with the recording start time of the program (step S114).

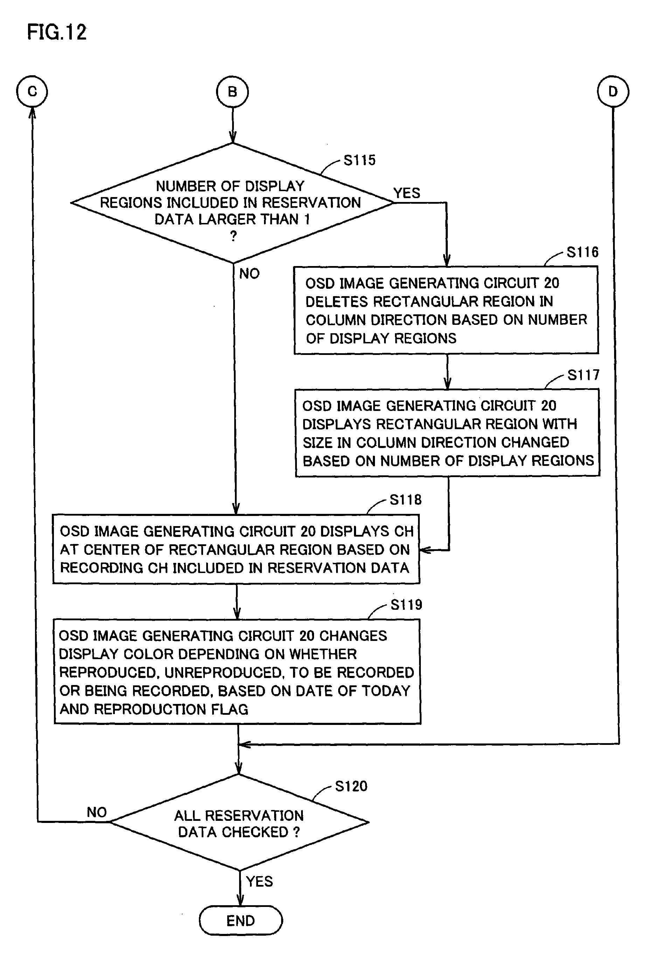

Referring to Fig. 12, system control circuit 18 determines whether or not the number of display regions included in the reservation data is larger than 1 (step S115).

In step S115, when the number of display regions that is included in the reservation data is larger than " 1 ", OSD image generating circuit 20 deletes certain rectangular region(s) in the column direction based on the number of display regions. For example, when the number of display regions included in the reservation data is "2", OSD image generating circuit 20 deletes the rectangular region immediately under the rectangular region in the column direction that corresponds to the read reservation data (step S116).

Based on the number of display regions included in the reservation data, OSD image generating circuit 20 generates a rectangular region with the size in the column direction changed (step S117).

For example, when the number of display regions included in the reservation data is "2", OSD image generating circuit 20 displays a rectangular region having its size enlarged to match two rectangular regions in the column direction.

Based on the CH of recording that is included in the reservation data, OSD image generating circuit 20 displays the CH at the center of the rectangular region corresponding to the reservation data (step S118).

In step S115, when the number of display regions that is included in the reservation data is smaller than 1, system control circuit 18 proceeds to step S118.

Based on the date of today and the reproduction flag included in the reservation data and indicating whether or not the program has been reproduced, system control circuit 18 determines whether the program in the read reservation data has been reproduced, has been unreproduced, is to be recorded, or is being recorded. More specifically, when the program in the read reservation data is recorded before today and the recorded program has been reproduced, system control circuit 18 determines that the reservation data is for the reproduced program. When the program in the read reservation data is recorded before today and the recorded program has not been reproduced, system control circuit 18 determines that the reservation data is for the unreproduced program. When the program in the read reservation data is to be recorded today or after today, system control circuit 18 determines that the reservation data is for the program to be recorded. When the program in the read reservation data is now being recorded today, system control circuit 18 determines that the reservation data is for the program being recorded.

According to the state of the program, namely according to whether the program has been reproduced, has been unreproduced, is to be recorded or is being recorded, OSD image generating circuit 20 changes the display color of the rectangular region corresponding to the reservation data (step S119).

System control circuit 18 then determines whether it has checked all the reservation data in the simple recording table (step S120).

In step S120, when all the reservation data in the recording table have not been checked, system control circuit 18 returns to step S111.

In step S120, when all the reservation data in the recording table have been checked, system control circuit 18 ends the process.

While the menu screen is being displayed, if an operation signal is provided in response to selection of a time frame by a user, system control circuit 18 refers to the rows and columns corresponding to the selected time frame in the management table. OSD image generating circuit 20 displays respective times corresponding to respective rows on the menu screen. System control circuit 18 then proceeds to step S111 of the flowchart shown in Fig. 11.

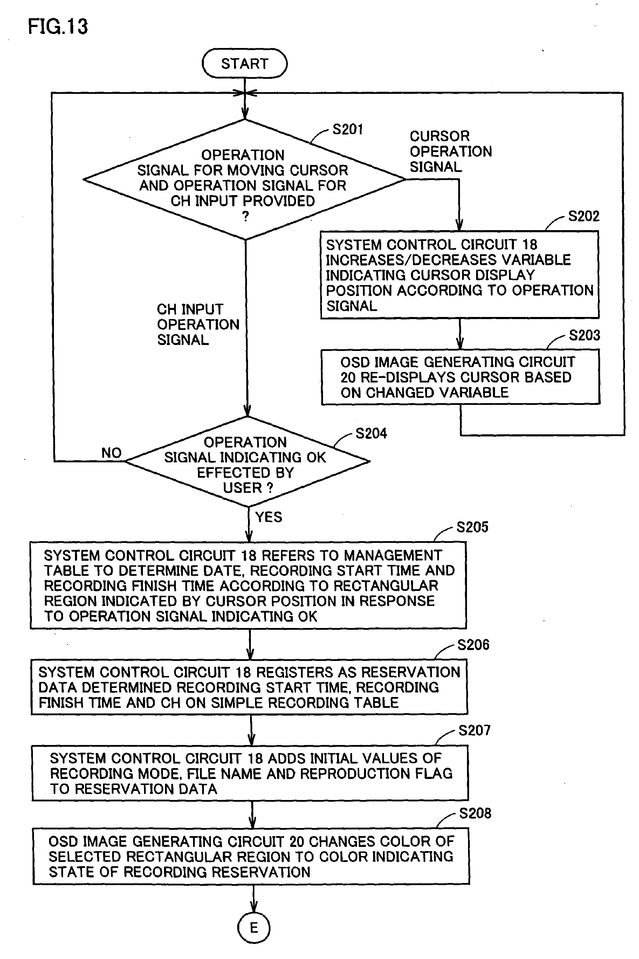

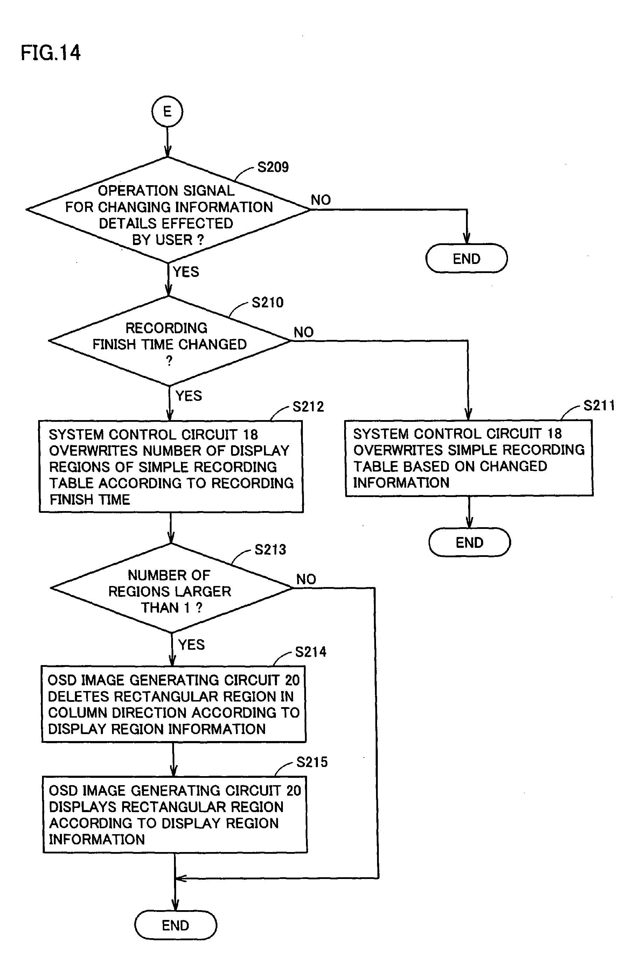

Figs. 13 and 14 show a flowchart of an operation of making a recording reservation with the menu screen of the simple recording reservation according to operation signals effected by a user.

Referring to Fig. 13, system control circuit 18 determines whether or not an operation signal for moving the cursor and an operation signal for CH input are provided in response to operation of the user (step S201).

According to the operation signal for moving the cursor in step S201, system control circuit 18 changes the variable representing the position of the cursor to be displayed (step S202).

Based on the changed variable, OSD image generating circuit 20 re-displays the cursor on the menu screen (step S203).

Then, system control circuit 18 returns to step S201.

According to the operation signal for CH input in step S201, system control circuit 18 determines whether or not an operation signal indicating user's "OK" is provided (step S204).

In step S204, when the operation signal indicating user's OK is not provided, system control circuit 18 returns to step S201.

When the operation signal indicating user's OK is provided in step S204, system control circuit 18 refers to the management table to derive therefrom the date and time corresponding to the rectangular region indicated by the cursor position and determine the recording start time and recording finish time in response to the operation signal indicating user's OK (step S205).

Then, system control circuit 18 registers, on the simple recording table, the reference date, recording start time, recording finish time and the CH entered by the user, as reservation data (step S206).

System control circuit 18 adds, to the reservation data on the simple recording table, the recording mode, file name, reproduction flag and the initial value of the number of display regions (step S207).

OSD image generating circuit 20 changes the color of the selected rectangular region to the color corresponding to the state of the recording reservation (step S208).

Referring to Fig. 14, system control circuit 18 determines whether or not an operation signal for changing information details is provided in response to user's operation (step S209).

When the operation signal for changing information details is not effected by the user in step S209, system control circuit 18 ends the process.

When the operation signal for changing information details is effected by the user in step S209, system control circuit 18 determines whether the information details to be changed concern the recording finish time (step S210).

When the information details to be changed do not concern the recording finish time in step S210, system control circuit 18 overwrites the simple recording table based on the changed information (step S211).

When the information details to be changed concern the recording finish time in step S210, system control circuit 18 calculates the number of display regions from the recording finish time to overwrite the simple recording table (step S212).

Then, system control circuit 18 determines whether the number of display regions according to the changed recording finish time is larger than 1 (step S213).

When the number of display regions is not more than 1 in step S213, system control circuit 18 ends the process.

When the number of display regions is larger than 1 in step S213, OSD image generating circuit 20 deletes some rectangular region(s) in the column direction according to the number of display regions (step S214).

According to the number of display regions, OSD image generating circuit 20 changes the size in the column direction of the rectangular region and displays the resultant rectangular region (step S215).

As discussed above, according to the present invention, one of a plurality of predetermined time frames can be selected in the recording reservation mode to easily make a reservation for a recording in the time frame at user's choice. For example, one day is divided into time frames each including six hours, i.e., time frames of the morning navigation, afternoon navigation, evening navigation and midnight navigation, so that the user can readily make a recording reservation in a time frame that the user chooses.

In the recording reservation mode, the menu screen of one of the predetermined time frames is displayed so that the user can make a recording reservation in a certain time frame in a short period of time without such operation as scrolling.

In searching for any program which has been recorded, the user can select the time frame of the recorded program to easily find the target program.

A plurality of rectangular regions correlated with respective dates and times are displayed on the menu screen in the recording reservation mode. Accordingly, a reservation for a recording of a program of a certain date, time and CH can easily be made according to selection of a certain rectangular region and input of the CH by a user.

### Second Embodiment

An information recording and reproducing apparatus according to a second embodiment of the present invention has the same basic configuration as that of information recording and reproducing apparatus 100 of the first embodiment shown in Fig. 1, and thus the description thereof is not repeated here.

Regarding information recording and reproducing apparatus 100 in the second embodiment of the present invention, system control circuit 18 refers to a simple recording table displaying the menu screen of the simple recording reservation for one of respective time frames of the morning navigation, afternoon navigation, evening navigation and midnight navigation. This simple recording table has a data structure different from that of the simple recording table of the first embodiment in terms of the following features.

The simple recording table in the second embodiment of the present invention refers to a plurality of simple recording tables corresponding respectively to a plurality of time frames. For example, simple recording tables for respective time frames of the morning navigation, afternoon navigation, evening navigation and midnight navigation are stored in memory 4 or on hard disk device 10.

The simple recording table corresponding to each time frame includes reservation data for a program to be recorded and reservation data for a program having been recorded in a predetermined period. The simple recording table for example includes reservation data for one week before today, which is measured by timer 26, and one week after today.

A description is given below of an operation of displaying the menu screen of the time frame corresponding to the evening navigation in response to an operation signal effected by a user.

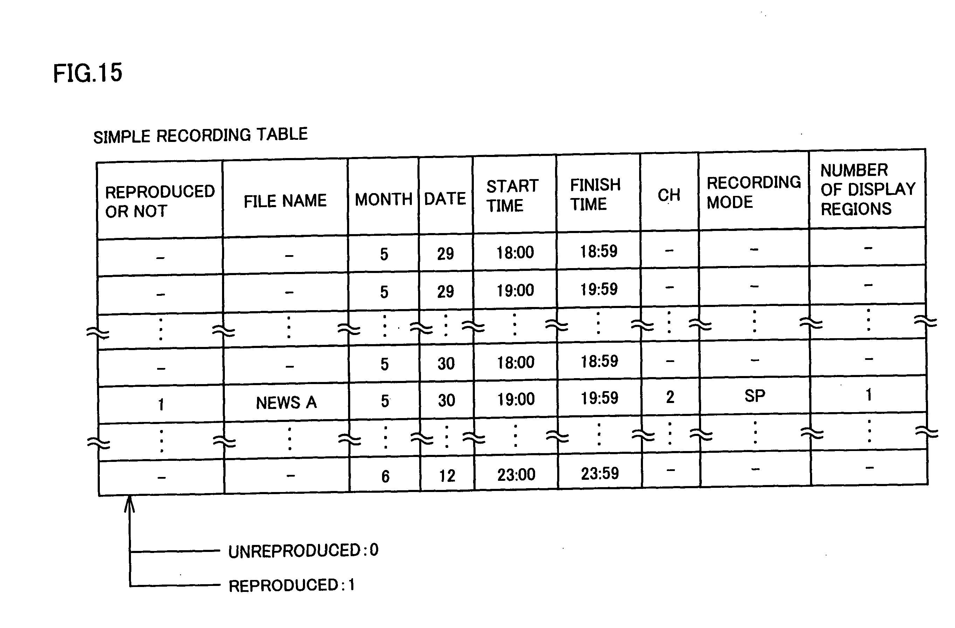

As shown in Fig. 15, the simple recording table for the time frame corresponding to the evening navigation includes reservation data registered in the time frame of the evening navigation (from 6 p.m. to 23:59 p.m.) and includes a table correlating times at intervals of a predetermined time with dates.

When a reservation for a recording is made, the reproduction flag, file name, CH, recording mode and the number of display regions are registered on a part of the simple recording table that corresponds to the month, date and starting time of the recording reservation.

In response to an operation signal for displaying the menu screen for the time frame corresponding to the evening navigation, system control circuit 18 may refer to the simple recording table for the time frame of the evening navigation based on information about the time frame included in the header of data of the simple recording table. Alternatively, system control circuit 18 may refer to a plurality of simple recording tables and then refer to the simple recording table for the time frame of the evening navigation based on the time-frame flag at the top of the table.

System control circuit 18 thus refers to the simple recording table for a time frame selected by a user. For example, when an operation signal is effected by the user for selecting the evening navigation, system control circuit 18 refers to the simple recording table as shown in Fig. 15 for the time frame of the evening navigation. Based on the month, date and starting time of the simple recording table, system control circuit 18 generates a management table for displaying the menu screen.

When the date measured by time 26 is changed, system control circuit 18 updates the simple recording table. Specifically, system control circuit 18 updates the simple recording table so that it includes registered reservation data of one week before today and one week after today measured by timer 26 and includes a table correlating dates with times at predetermined time intervals in the selected time frame.

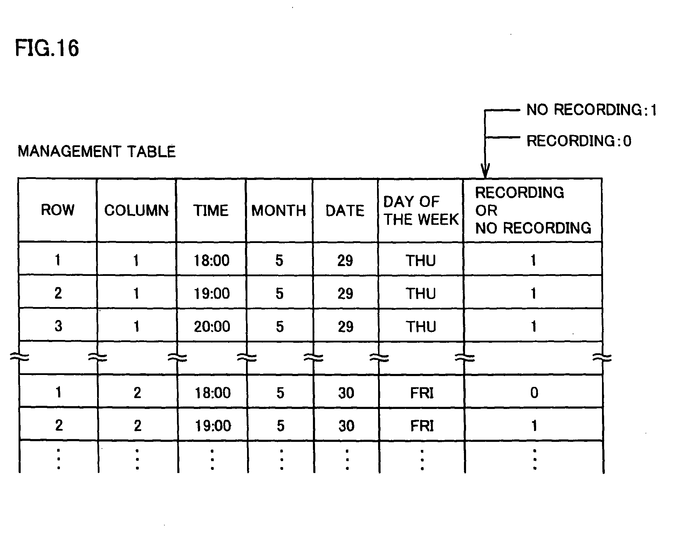

As shown in Fig. 16, system control circuit 18 correlates the month, date and start time included in the simple recording table described in connection with Fig. 15 with respective columns and rows. For example, system control circuit 18 correlates the central column of the rectangular regions displayed in the form of the matrix on the menu screen with the date of today measured by timer 26. Then, using the date of today correlated with the central column as the origin, system control circuit 18 correlates respective dates and times of one week before today and one week after today with other columns and rows respectively. Based on information about the day of the week stored in memory 4 or on hard disk device 10, system control circuit 18 registers the day of the week corresponding to each date on the management table.

Based on the generated management table, OSD image generating circuit 20 generates a signal for displaying the menu screen for the evening navigation.

According to an operation signal for changing the time frame that is effected by the user, system control circuit 18 refers to the simple recording table for the selected time frame to generate the management table. Based on the generated management table, OSD image generating circuit 20 generates a signal for displaying the menu screen for the selected time frame.

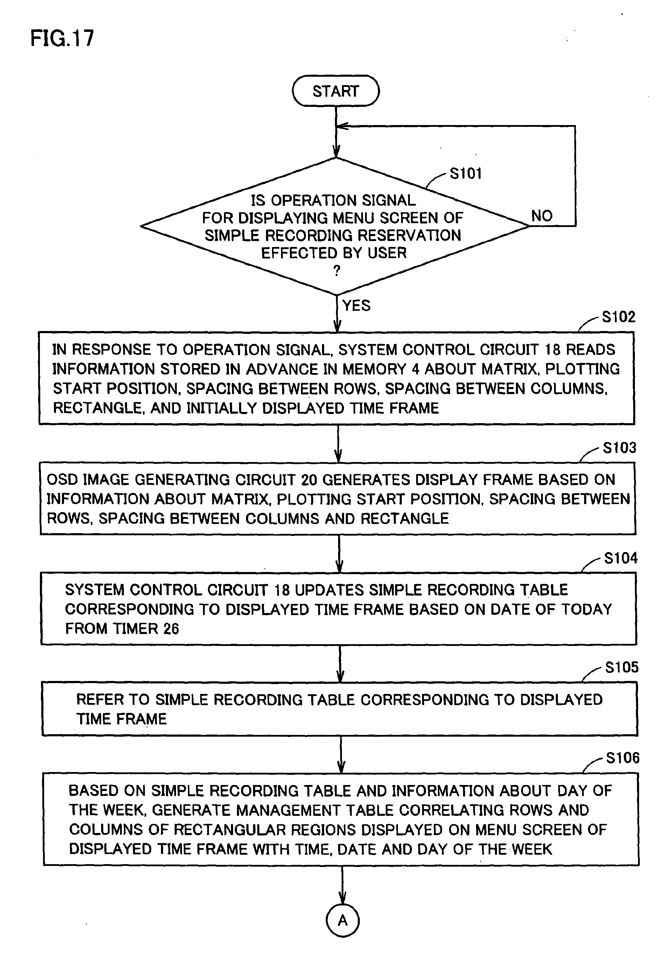

Figs. 17-19 show a flowchart of an operation of displaying a menu screen of the simple recording reservation in response to an operation signal effected by a user according to the second embodiment.

Referring to Fig. 17, the part of the process from step S101 to step S103 is the same as that from step S101 to step S103 of the flowchart described in connection with the first embodiment and shown in Fig. 11, and thus the description thereof is not repeated here.

In step S104, system control circuit 18 updates a simple recording table corresponding to a displayed time frame corresponding to one of the morning navigation, afternoon navigation, evening navigation and midnight navigation. System control circuit 18 updates the simple recording table so that it includes registered reservation data of one week before today and one week after today measured by timer 26 and includes a table correlating dates with times at predetermined time intervals in the time frame to be displayed. System control circuit 18 may update a plurality of simple recording tables corresponding to respective time frames.

System control circuit 18 refers to the simple recording table for the displayed time frame (step S105).

Based on the simple recording table for the displayed time frame and the information about the day of the week, system control circuit 18 generates the management table correlating the rows and columns of the rectangular regions on the menu screen with respective times, dates and days of the week (step S106).

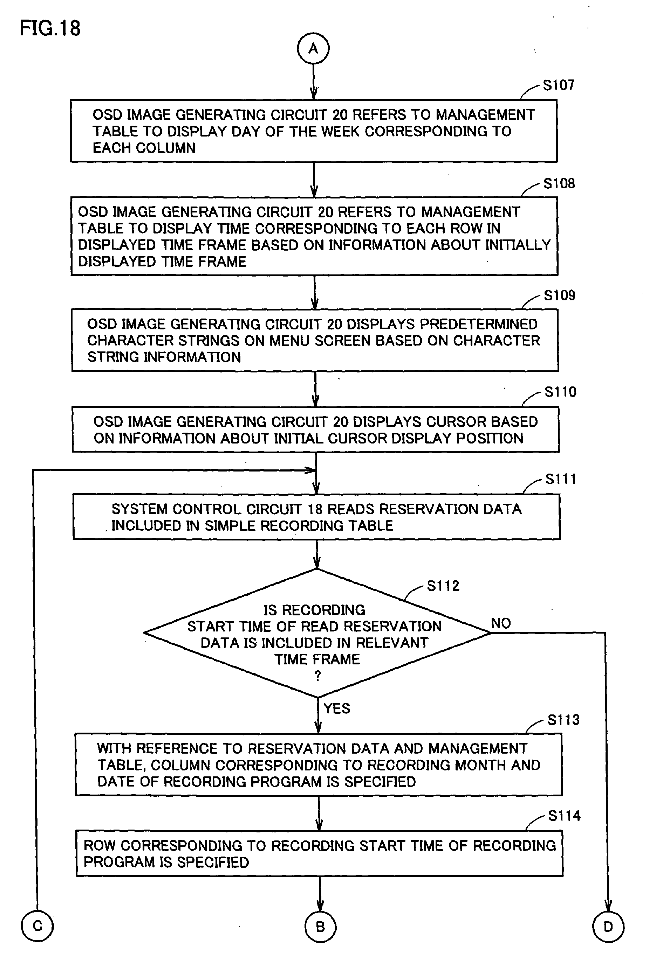

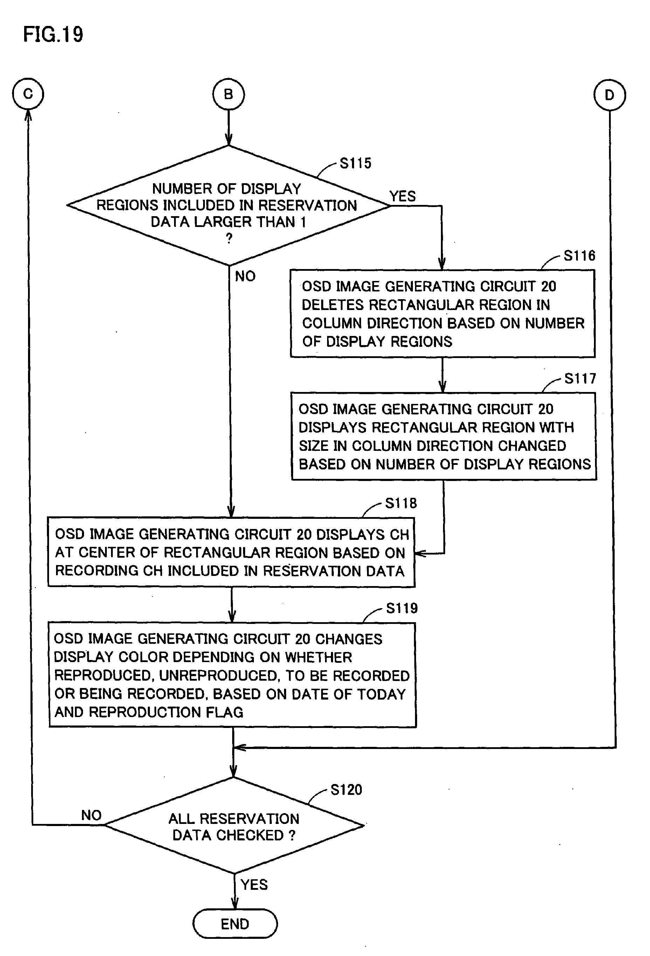

Referring to Figs. 18 and 19, the part of the process from step S107 to step S120 of the flowchart is the same as that from step S107 to step S120 of the flow chart described in connection with the first embodiment and shown in Figs. 11 and 12, and thus the description thereof is not repeated here.

When an operation signal is provided for selecting a time frame that is effected by the user, while the menu screen is being displayed, system control circuit 18 refers to the simple recording table for the selected time frame. Based on the referenced simple recording table, system control circuit 18 updates the management table. Based on the updated management table, OSD image generating circuit 20 displays respective times corresponding to respective rows on the menu screen. After this, system control circuit 18 performs the same process as that of the first embodiment from step S111 as shown in Fig. 18, and thus the description thereof is not repeated here.

Information recording and reproducing apparatus 100 of the second embodiment of the present invention discussed above has the same effect as that of information recording and reproducing apparatus 100 described in connection with the first embodiment, and thus the description thereof is not repeated here.

The management table described with reference to Fig. 16 is not particularly limited to the one generated each time a time frame is selected. For example, management tables corresponding to respective time frames may be provided. After the time measured by timer 26 is changed and accordingly the simple recording table is updated, respective management tables for respective time frames corresponding to the morning navigation, afternoon navigation, evening navigation and midnight navigation may be generated. Further, in response to an operation signal effected by a user for changing the time frame, a signal for displaying the menu screen may be generated based on the management table corresponding to the selected time frame.

As heretofore discussed, a user can select one of a plurality of predetermined time frames to easily make a recording reservation of the time frame at user's choice.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A data recording and reproducing apparatus (100) comprising:
a receiving unit (6) receiving program data of a channel;
a storage unit (4, 10) storing information about a recording operation and a reproducing operation;
an input unit (2) receiving an externally input instruction;
a clock unit (26) measuring date and time; and
a control unit (16) controlling the recording operation and the reproducing operation,
said storage unit (4, 10) including a circuit storing a recording table having reservation data registered thereon, time-frame information for specifying a plurality of predetermined time frames, and configurational information for displaying a plurality of regions in a predetermined shape in a matrix form on a plurality of menu screens corresponding respectively to said plurality of predetermined time frames, and
said control unit (16) including:
a time-frame selection circuit (18) selecting one of said plurality of predetermined time frames in response to an input from said input unit (2);
a circuit (20) generating a signal for displaying said plurality of regions in the predetermined shape in the matrix form on one of said menu screens that corresponds to said selected predetermined time frame according to said configurational information, said plurality of regions being correlated with respective dates and respective times at predetermined time intervals based on said time-frame information;
a circuit (18) selecting one of said plurality of regions in the predetermined shape on said menu screen in response to an input from said input unit (2);
a circuit (18) generating in response to an input of a channel from said input unit (2), said reservation data based on date and time of recording correlated with said selected region in the predetermined shape and based on said input channel and registering said generated reservation data on said recording table; and
a circuit (18) issuing an instruction to record said program data received by said receiving unit (6) on said storage unit (4, 10) when the date and time measured by said clock unit (26) match said date and time of recording.

2. A data recording and reproducing apparatus (100) comprising:
an input unit (2) receiving an externally input instruction;
a storage unit (4, 10) storing information about operation of said data recording and reproducing apparatus,
said storage unit (4, 10) including a circuit storing information about recording reservation for correlating reservation data with a plurality of predetermined time frames and configurational information for displaying a plurality of regions in a predetermined shape in a matrix form on a plurality of menu screens corresponding respectively to said plurality of predetermined time frames; and
a control unit (16) controlling the operation of said data recording and reproducing apparatus,
said control unit (16) including:
a time-frame selection circuit (18) selecting one of said plurality of predetermined time frames in response to an input from said input unit (2);
a circuit (20) generating a signal for displaying said plurality of regions in the predetermined shape in the matrix form on one of said menu screens that corresponds to said selected predetermined time frame according to said configurational information, said plurality of regions being correlated with respective dates and respective times at predetermined time intervals; and
a reservation information registration circuit (18) selecting one of said plurality of predetermined regions in the predetermined shape in response to an input from said input unit (2) and registering said selected region as said information about recording reservation.

3. The data recording and reproducing apparatus according to claim 2, wherein
said time-frame selection circuit (18) includes a circuit for displaying, on said menu screen, a plurality of specific areas corresponding respectively to said plurality of predetermined time frames and specifying which of said predetermined time frames corresponds to a specific area selected from said plurality of specific areas in response to an input from said input unit (2).

4. The data recording and reproducing apparatus according to claim 2, wherein
said plurality of predetermined time frames correspond to time frames determined by dividing one day into the time frames each including six hours.

5. The data recording and reproducing apparatus according to claim 2, wherein
said information about recording reservation includes a recording table having said reservation data registered thereon and time-frame information for specifying said plurality of predetermined time frames.

6. The data recording and reproducing apparatus (100) according to claim 5, further comprising:
a receiving unit (6) receiving program data of a channel; and
a clock unit (26) measuring time and date, wherein
said reservation information registration circuit (18) includes:
a circuit selecting one of said plurality of regions in the predetermined shape on said menu screen in response to an input from said input unit (2); and
a circuit generating in response to an input of a channel from said input unit (2), said reservation data based on date and time of recording that are correlated with said selected region in the predetermined shape and based on said input channel and registering said generated reservation data on said recording table, and
said control unit (16) further includes a circuit issuing an instruction to record said program data received by said receiving unit (6) on said storage unit (4, 10) when the date and time measured by said clock unit (26) match said date and time of recording.

7. The data recording and reproducing apparatus according to claim 6, wherein
said respective dates correlated with said plurality of regions in the predetermined shape include dates from a predetermined date in the past to a predetermined date in the future, and
said control circuit (16) further includes a circuit (18) reproducing, based on said reservation data having recorded program data that corresponds to said selected region in the predetermined shape on said menu screen, said program data of said reservation data in response to an input from said input unit (2).

8. The data recording and reproducing apparatus according to claim 2, wherein
said information about recording reservation includes a plurality of recording tables corresponding respectively to said plurality of predetermined time frames and having said reservation data registered thereon.

9. The data recording and reproducing apparatus (100) according to claim 8, further comprising:
a receiving unit (6) receiving program data of a channel; and
a clock unit (26) measuring time and date, wherein
said reservation information registration circuit (18) includes:
a circuit selecting one of said plurality of regions in the predetermined shape on said menu screen in response to an input from said input unit (2); and
a circuit generating in response to an input of a channel from said input unit (2), said reservation data based on date and time of recording that are correlated with said selected region in the predetermined shape and based on said input channel and registering said generated reservation data on said recording table, and
said control unit (16) further includes a circuit issuing an instruction to record said program data received by said receiving unit (6) on said storage unit (4, 10) when the date and time measured by said clock unit (26) match said date and time of recording.

10. The data recording and reproducing apparatus according to claim 9, wherein
said respective dates correlated with said plurality of regions in the predetermined shape include dates from a predetermined date in the past to a predetermined date in the future, and
said control circuit (16) further includes a circuit (18) reproducing, based on said reservation data having recorded program data that corresponds to said selected region in the predetermined shape on said menu screen, said program data of said reservation data in response to an input from said input unit (2).
